# EUROPEAN PATENT APPLICATION

(11) **EP 1 580 861 A2**
(43) Date of publication of application: **28.09.2005**
(21) Application number: 05005719.9
(22) Date of filing: 16.03.2005
(51) Int. Cl.: H02H 7/085

(54) **Control automatism for the movement of a door**

(30) Priority: 17.03.2004 IT pd20040070
(71) Applicant: BALLAN S.p.A., 35010 Villa del Conte PD (IT)
(72) Inventor: Ballan, Giuseppe, 35010 Villa Del Conte PD (IT); Ballan, Genesio, 3501 Villa Del Conte PD (IT)

(57) **Abstract**

This is a control automatism for the movement of a door which triggers for the reading of the greater absorbed current in relation to a threshold value when the mobile part of the said door during movement encounters an obstacle outside it structure or intrinsic to the structure, in which the entity of the threshold exceeding value is detected following the same greater current absorbed by one or more motors that supply the movement compared in relation to the current absorbed in a previous and regular movement.

## Description

The user is requesting more and more of the manufacturer the automation of the movement of a normal door.

Due to the diffusion of the products available on the market, this movement has been carefully evaluated by the regulatory bodies, especially regarding the functional safety; and for this reason the requirements requested for the movement of a normal door have become more and more stringent.

The requirements of the buyer and user are as usual directed first and foremost towards reliable and economical devices before functional safety.

Naturally, numerous different automation systems have been implemented in the past that, up until now, haven't fully answered that which has been requested by the present standards at the same time meeting the expectations of the majority of buyers.

In fact there is a principle safety requirement that imposes the safe movement of the door during the movement of the mobile parts regarding persons or objects that may be in the area which the mobile parts occupy.

It is evident that the widespread use of pneumatic safety edges, photocells and other linear and/or punctual safety devices, does not fully resolve the problem, because they leave the major part of the space concerning the movement uncovered, and do not protect the space taken up by the door.

The use by some manufacturers of a force threshold distributed by the movement motors beyond which the system blocks, have undoubtedly increased the safety of the automation, but have still not fully resolved the problem.

In fact, the force threshold distributed by the motors, which is used for very heavy doors, is the same threshold that is used for lightweight doors, which obviously respond differently when coming into contact with persons or objects.

For this reason it has been considered to make the threshold of the system adjustable and empirically adjust the threshold each time for each door installed. This solution also has numerous limits. In fact it requires specialised personnel for the set-up of each individual door with the final adjustment of the tripping threshold each time depending on the subjectiveness of the said specialised personnel during installation.

Once the said tripping threshold has been fixed by the specialised personnel, it is obvious that a change in the conditions in which the door is found' (for example, the change in temperature from summer to winter has a great influence on the lubricants of the reduction gear used) the movement force of the mobile parts substantially varies with consequent variation of the current absorbed by the motors to overcome the said force, with the possibility that the said tripping thresholds are exceeded without any contact occurring, simply due to the variation of the summer and winter temperatures.

The subject system of the patent fully responds to all the above mentioned problems and other problems that will appear evident in the subsequent description.

The control automatism for the movement of a door can be applied to any door or gate, be it up-and-over or sectional, with vertical or horizontal axis, and with one or more leafs.

The control automatism for the movement of a door, subject of the patent, is mainly characterised for the part distinguished by the independent claims.

The subject system is comprised of a traditional motorised part the automation of which is controlled by a control logic which takes numerous variables into account automatically adapting to the changes which are necessary in time.

The traditional automation requires the use of one or more motors which move the mobile parts of the door. These motors can be applied in the position deemed more suitable, secured to the supporting structure or fitted to the mobile part.

Advantageously, these motors can be combined to a position detection system and can utilise two position limit switches in the fully open or fully closed conditions.

The control logic includes a set of control cards that manage the functioning of the system, which receive the external manual commands, includes the safety inputs, the measurement inputs and/or acquisition of the analogical dimensions and the said control logic can command and/or emit acoustic and luminous signals.

Through the real-time acquisition and measuring of the current distributed to the motors, and impulses generated by the encoder, the situation of the door is constantly detected by the control logic.

In particular, the control logic detects the position in which the door is found, and checks and controls if functioning occurs regularly, if the force is greater than that memorised for each instant of the door movement, if there is an abnormal absorption of current due to a false impulse or if an obstacle is present in the path of the leaf.

The peculiarity of the present logic allows, even if the type of door that is manoeuvred varies, to maintain the impact force within very limited quantity and time limits, which comply to the present standards and are practically independent from the type of door manoeuvred.

In fact it is very important that the control logic tripping threshold is not fixed and constant, because the force of the leaf movement is variable during its manoeuvre, but the said threshold is correlated, with certain sensitivity, to the movement force. This sensitivity can also advantageously vary during the opening and closing phases.

In fact, the manoeuvring force of a door is quite often variable for different geometrical (small and lightweight doors in respect to large and heavy doors), start and end of run reasons (at the end of an up-and-over door opening phase for example, where the door tends to move upwards).

Furthermore, other factors also influence the force of the movement, significantly altering it, as for example the operating temperature (from the day to the night, from summer to winter), wear, rust, the deterioration of the seals, inactivity for prolonged periods, etc.

It is obvious that in these cases an ideal operating profile cannot exist for each individual door, but this operating profile must be adapted to the circumstances.

The system of the patent, after an initial acquisition of a profile, updates after each cycle, or after a specific number of operating cycles, updating the (operating) profile.

In this way the system is able to take into consideration even the most frequent of factors that influence the operating profile, thereby permitting to considerably increase the efficiency of the system, guaranteeing the immediate safety tripping in the event of contact with persons or objects.

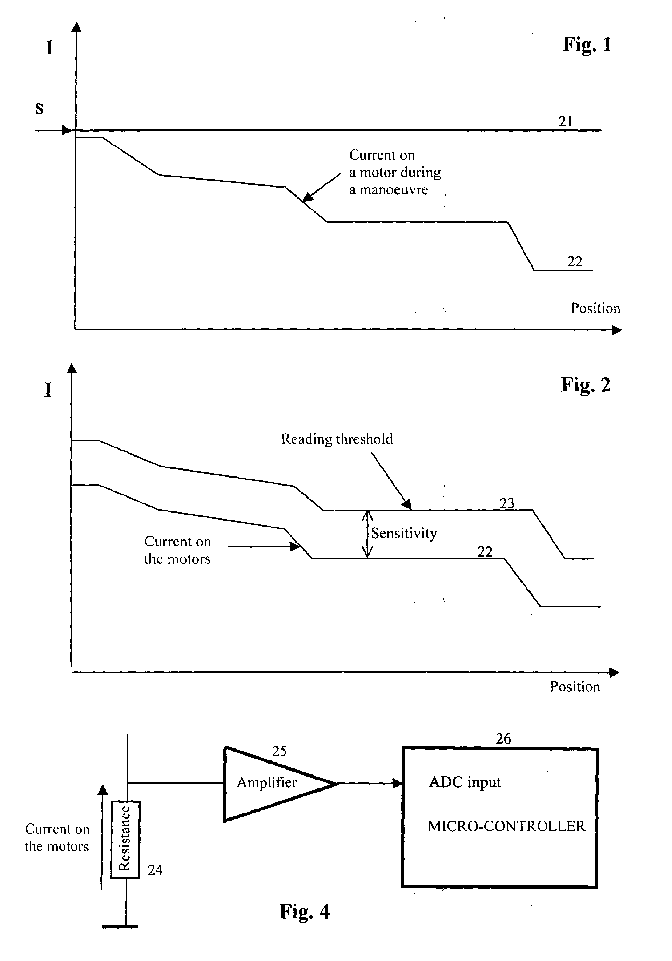

In fact, with reference to fig. 1, assuming to have an absorption profile of the current on the motors 22 during a manoeuvre such as that demonstrated, if a threshold 21 equal to the maximum absorbed current value during a manoeuvre, there will obviously (if to define the presence of an obstacle, it is assumed that the absorbed current in relation to a threshold is exceeded) be no problems during the normal operation, but in the last stage to the right of the manoeuvre, the threshold 21 is too high in respect to the operating current 22, and in the presence of an obstacle, this is detected when the impact force has already slightly exceeded that accepted or foreseen by the standards.

In addition to the said inconvenience, there is also the problem that false obstacle detections may occur around the maximum absorbed current values (a value which is assumed as a value just below the obstacle detection threshold 21) because a slight modification of the surrounding conditions may slightly increase the manoeuvre force and cause the motors to absorb a current 22 greater than the threshold 21.

For this reason the device of the system initially samples a map of currents 22, see fig. 2, that can be any type and variable and which assumes as a threshold 23 of the current absorbed by the motors, a profile that follows (moved by a certain definable sensitivity or moved by a variable sensitivity: both for opening as well as closing and variable during the said manoeuvre) the course of the said map of currents 22.

Due to the fact that the said map of currents can vary in time, for the said reasons, in respect to the moment in which it has been memorised, the same map 22 is sampled on each cycle, and under certain conditions, updated.

In this way there is always a reference threshold 23 that reflects the last operating condition and that permits to detect an obstacle without the force of the system exceeding that which is permitted and foreseen by the standard.

Since the said device has to operate on any type of door (be they large and heavy, small and light, with vertical or horizontal axis), it is obviously impossible to assign an initial currents map to the system beforehand to which it can refer to for the initial manoeuvre. For this reason the first opening and closing cycle manoeuvre (because the absorbed current of the opening manoeuvre can be different from that of the closing manoeuvre), an initial manoeuvre is performed with a sampling of the absorbed current and subsequently memorised to create the current threshold for the management of obstacles.

In this way each system has its own "personalised" map after the first manoeuvre cycle, which takes into account all system variables, in as much that each door assumes the operating conditions during installation that can be different from another type of door

An achievable, but not limitative, example of the control logic combined to an up-and-over door is described below.

The functioning of the control logic foresees an initial learning stage of a sample map of the motors absorbed current during the first manoeuvre of the mobile parts of the door, after which the said map is used in the subsequent manoeuvre cycles for the management of obstacles, and finally, under certain conditions, updated to take into account the changes that the door may have undergone.

The initial manoeuvre is performed without safety devices (except that which limits the maximum absorbed current of the motors).

During a normal manoeuvre, both opening and closing, the entire course of the mobile parts is divided following a set number of sections, which in the example 40 sections where chosen to illustrate.

A measurement of the motors absorbed current is performed for each step of the encoder (the steps of the encoder will depend on the number of previously set section and by the number of driving shaft revolutions to perform a complete opening and closing manoeuvre).

The maximum current measured between the current measured within the section is associated to each of the said sections.

Therefore a map of currents is obtained (40 in the example) made up of the maximum values measured for each single section in which the entire manoeuvre has been divided.

This map is subsequently memorised in an Eprom for future use.

During working operation, the map schedule, and opening and closing currents are also updated, instead of at the end of opening manoeuvre, in relation to the first opening and closing operation.

The new map obtained during the last previous manoeuvre related to the various divided sections, as mentioned above (or one of the last previous manoeuvres; if the comparison is performed on a set number of manoeuvres), is compared, for each of the values of the various corresponding sections, with those of the already memorised sample map.

If all the samples are within an acceptability range (both positive as well as negative) the last map obtained becomes the new sample map and is memorised in the Eeprom.

If this is not so, or if not all of the sample are within the said acceptability range, the newly obtained map is discarded and the previous sample map is maintained.

The significance of this comparison lies in the fact that a significant sample map is required without values that could be due to accidental or transitory conditions, like a gust of wind for example, an excessive transitory and unexpected load on the door which has not been detected as an obstacle, etc.

In this way a map of the absorbed currents is obtained (normally different for the opening and closing phases) that follow both the positive and negative force conditions of the motors during the movement of the mobile parts of the door.

If for example there is wear that in time slowly increases the force, and an increase of the absorbed current by the motor, consequently this variation is followed and memorised in the sample map.

If on the other hand a decrease of the friction is obtained improving the smoothness of the mobile parts, as well as a decrease of the absorbed current, the variation is consequently once again followed and memorised in the sample map.

The adjustment of the sample map to the effective current requested by the motors for the manoeuvre of the mobile parts of the door, cause the control circuits to recognise, for the management of the obstacle, the requested effective current in each single positioning section of the mobile parts, the necessary current for the manoeuvre in that section, and the current delivered to the motors exceeds a determined threshold value for each section, from a memorised sample current value increased by a determined value, defined as "force sensitivity".

The "force sensitivity" value can be a variable parameter for the opening phase which is different to the closing phase and can also be variable during a similar opening and closing phase.

Therefore each time a manoeuvre is positively performed without interruptions, without obstacles, without alteration of any of the acquired map values in relation to the corresponding sample map values beyond the acceptability range, the acquired map becomes the sample map and is memorised in the Eeprom.

To avoid deviation of the sample map over a value of the current absorbed by the manoeuvre motors, which would be excessive for the movement of the door and could compromise the functioning of the motors themselves, a value has been set, which if exceeded the door will block, requiring the job of specialised personnel.

During the same movement of the doors mobile parts, in addition to the sampling of the current absorbed by the motors, the control circuit continually verifies that a collision against an obstacle has not occurred.

This "obstacle presence" control is mainly based on an abnormal, sharp absorption of current beyond a threshold.

This threshold is obtained, for each individual section in which the mobile part find itself during the movement, from the corresponding current value memorised in the sample map, increased by a set "sensitivity" value.

A control is naturally performed to ensure that the sample current value is not a false impulse, but the said current value must maintain itself beyond the threshold value for a set time "tolerance".

The "obstacle presence" control at the same time uses impulses obtained from the encoder.

The time passed between two encoder steps is measured. If the said time is greater than a certain value, preset in relation to the operating mode (normal or end or beginning), this means that the door speed has dropped below a certain value and it can therefore be presumed that it has encountered an obstacle and therefore the system reacts as if it had encountered an obstacle.

The said "obstacle presence" control, as far as the current absorption is concerned, may not function correctly at the beginning, because the motors require a pickup current that is much greater than the normal working current; therefore the "obstacle presence" control does not trigger for a brief time at the beginning, if the sample current exceeds the threshold current. This control of the currents could eventually be inhibited (or be irrelevant) during particular manoeuvre phases (for example in proximity to the set statuses, being the completely open and completely closed positions). Furthermore, one of the two controls can be inhibited, that which refers to the absorbed current of the motors or that which refers to the impulses obtained from the encoder, for more or less long sections of the door movement both in opening as well as closing, allowing in any case the safe manoeuvre of the door itself.

Even if the said "obstacle presence" control is very quick at detecting that the current threshold has been exceeded by the sample current, it is an advantageous improvement, with a limitation of the impact force, with the use of a resistance, of suitable value, in series with the manoeuvring motors.

The increase in current due to the impact causes an increase in the voltage drop on the resistance and a consequent decrease of the voltage on the motor, which reduces the delivered torque and therefore the force exerted on the obstacle itself.

The combined action of the "obstacle presence" control that acts after having established that the said threshold has been exceeded by the absorbed current of the motors, with the drop in voltage on the said motors, which decreases the distributed torque of the motor, reducing the fore exerted on the obstacle, makes the control automation for the movement of a door fully satisfactory regarding the limitations of the present standard, but above all makes the system safe, sensitive and reliable in the event of a collision against an obstacle.

In fact the said resistance is an element that increases the safety of the device: immediately triggering with the variation of the current which passes through it, it can be set in series to a motor and its breakage causes the power supply to be blocked to the motor itself.

Furthermore, the introduction of a resistance in series to the motor, allows the use of a greater "force sensitivity" value; in fact, at parity of the current absorbed by a motor, during collision by the mobile parts, in which the said series resistance is present, the motor is powered with a lower voltage and therefore distributes an inferior manoeuvre torque of the mobile parts that hit the obstacle.

It is therefore possible to increase, the said impact occurring with a lesser force, the tripping threshold of the "obstacle presence" control, making the automation immune to disturbances or false obstacle recognitions that a tripping threshold close to the current profile absorbed by the motors would have caused.

An additional descriptive detail will be highlighted by the analysis of the drawings and some flow diagrams relevant to the functioning of the control automation for the movement of a door regarding the safety aspect, relative to a preferred realisation form, illustrated in an indicative but not limitative manner.
Fig. 1 shows an illustrative graph of the inconveniences caused through the use of a fixed threshold.
Fig. 2 shows an illustrative graph of the advantages deriving from the creation of a variable threshold.
Fig. 3 illustrates in a block diagram the various components that make up the control automation managed by the control card.
Fig. 4 illustrates the principle layout of the current reading circuit.
Fig. 5 illustrates in a flow chart, the opening phase managed by the control card.
Fig. 6 illustrates in a flow chart, the closing phase managed by the control card.
Fig. 7 illustrates in a flow chart, the control operation of the acquired map in relation to the sample map and the eventual memorisation of the acquired map which becomes the sample map during the opening phase.
Fig. 8 illustrates in a flow chart, that which is illustrated in fig. 6 but referring to the closure phase.
Fig. 9 illustrates in a flow chart, the obstacle management task.
Fig. 10 illustrates in a flow chart, the routine performed on each step received by the encoder that determines the threshold value.
Fig. 11 illustrates in a flow chart, the acquisition of the maximum values measures for each section and the creation of the acquired map.

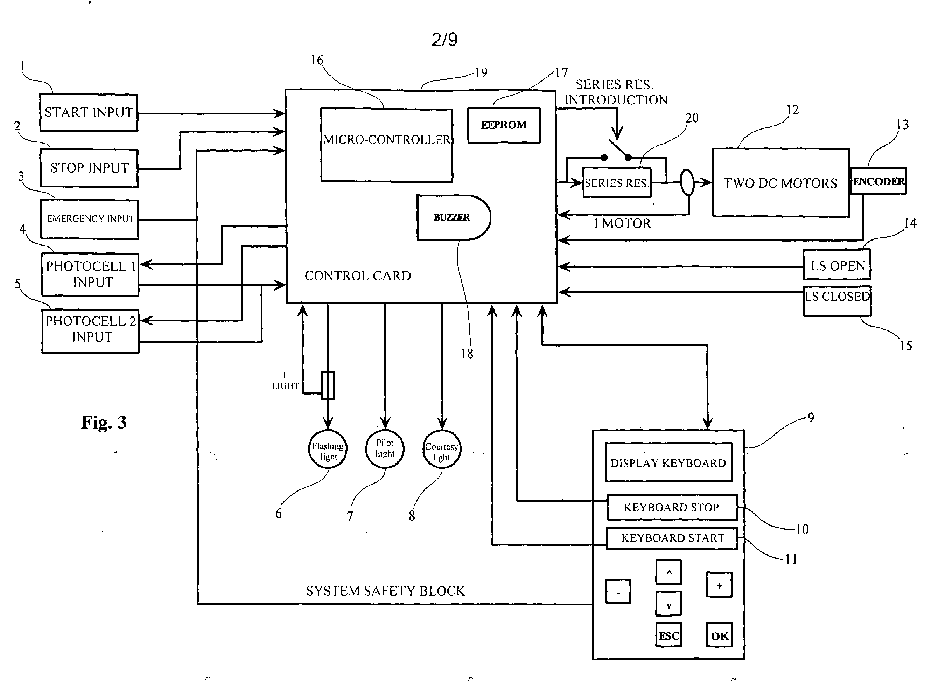

With reference to fig. 3, some of the more significant blocks of the control automation for the movement of a door are indicated.

The control system, implemented in the control card 19, allow the movement of the mobile parts of a door (not shown) kinematically connected to one or more motors 12 (preferably two symmetrically positioned).

These motors 12 are controlled by the control card 19 and powered individually or in parallel by means of a resistance 20 in series to each motor 12, the resistance of which 20 as mentioned, serves in the event of an impact against an obstacle, and therefore with greater current absorption on the motors, to further reduce the impact force on the obstacle. In fact, the increase of current due to the impact causes an increase of the voltage drop on the resistance and a consequent decrease of the voltage on the motor, which reduces the torque and therefore the force exerted on the obstacle.

This resistance, as can be seen in the drawing, can be disconnected from the control circuit, for example in the points of maximum force at the beginning or at the end of the manoeuvre.

At least one of the motors 20 is equipped with an optical encoder 13, the signals of which sent to the control circuit 19 allow the system to recognise the position of the doors mobile parts at all times and monitoring the time that lapses between two subsequent impulses allows to recognise the instant speed of the driving shaft, interpreting an excessive decrease in the speed such as a collision against an obstacle and consequently acting upon it.

It should be noted that, at the ends of the manoeuvre by the mobile parts of the door, when the control of the current is disabled and the resistance 20 short-circuited to give the motors as much current as possible, the speed control always remains active to protect the system in this situation as well, it should also be noted that the speed control in these situations is made specifically sensitive to take the initial and final phases into consideration.

Two positioning limit switches are placed at the end of the mobile parts manoeuvre: open limit switch 14 and closed limit switch 15.

These limit switches 14 and 15 are essential to immediately detect when the system arrives at its opening and closing limits, and are also useful when, following the manual mechanical disconnection of the mobile parts of the movement kinematic motions (and therefore loose the position of the mobile parts through the encoder steps), the system is manually manoeuvred and reconnected to the automation motorisation and movement by means of the same.

The control circuit externally receive manual commands: input start 1, input stop 2 which are interpreted by the control logic to move and stop the movement of the doors mobile parts.

The control circuit also receives external safety signals: input emergency 3, input photocell-1 4, input photocell-2 5; which are monitored before and during the functioning of the automation, to verify that the space is taken up.

Another safety signal comes from the display keyboard 9.

This keyboard 9 transmits a series of control messages to the control circuit 19 to which the control circuit must suitably respond so as to demonstrate that it is completely functional.

In cases where the control circuit 19 is unable to suitably respond to the said control messages for some reason, the keyboard 9, which monitors the said control messages, send a safety message to the control system causing an electromechanical disconnection of the motor power supply.

It is also possible to control the control circuit by means of the keyboard stop command 10 and the keyboard start command 11.

The control circuit also manages various auxiliary outputs: a flashing light 6, a pilot light 7 and a courtesy light 8.

The flashing light 6 signals every movement of the doors mobile parts; the frequency of the flashes is greater, accompanied by an acoustic signal of a buzzer 18 (present on the control card), when the movement is performed without safety in the self-learning phase.

There is also a circuit that detects the distributed current to the flashing light. This current is memorised during the learning manoeuvre, depending on the number of flashing lights installed. If one or more flashing lights should malfunction, or accidentally become disconnected, the control circuit detects the fault and a warning is displayed on the display of the keyboard 9.

The obstacle recognition management system, in addition to using the encoder 13, also uses a real time measuring circuit of the current absorbed by the motors.

This current is proportional to the mechanical torque distributed by the motor and therefore to the force that the mobile parts of the door exert on a possible obstacle.

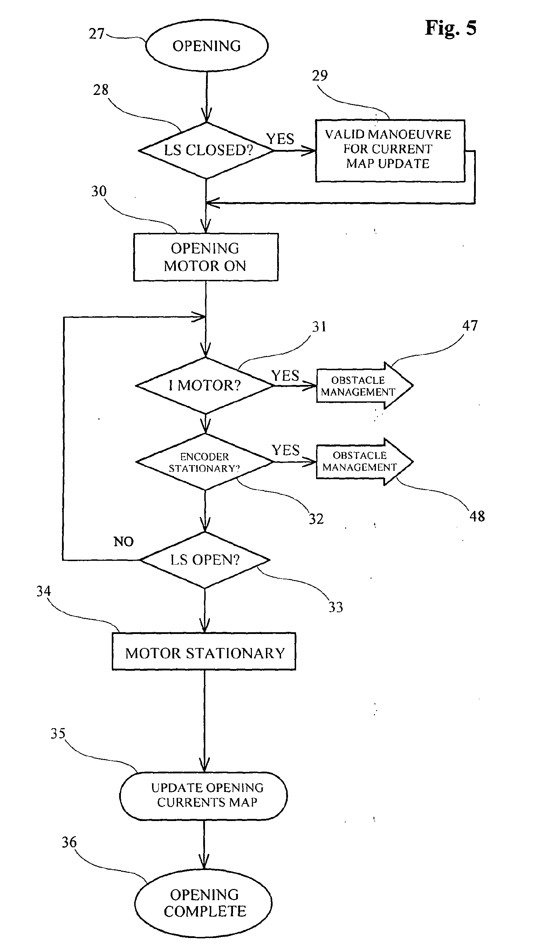

The principle layout of the current reading circuit, seen in fig. 4, presents a low value resistance 24 and high power that is crossed by the current distributed to the motors, causing a voltage drop that is amplified 25 and measured by the analogical-digital converter (ADC) 26 on the micro-controller 16 present on the control card 19

With reference to the flow chart of fig. 5, the steps related to an opening 27 phase of the doors mobile parts are indicated.

The system management software, initially verifies in the block 28, the status of the closed limit switch 15. If this is closed, it means that the door is starting from its initial position and therefore passes to block 29 and the manoeuvre that is made is a valid manoeuvre to update the current map. If on the other hand the closed limit switch 15 is open, this means that the door is not starting from its initial position but from an intermediate position. In this case the manoeuvre is not valid to update the current map.

Subsequently the opening command is given to the motor by block 30.

Two parallel tasks are performed for the execution of the movement during the entire opening manoeuvre: the motor current control task that verifies the status of flag I of the motor in block 31 and the control task of the stationary encoder situation in block 32 and these controls continue if the block 33 verification of the open limit switch 14 is negative, this being until the mobile parts of the door do not open the open limit switch 14. In this case the verification gives a positive value and therefore the motor is stationary with block 34 and, because there has been no inconvenience, passes onto the opening of the currents map routine 35 and with block 36 the "opening phase" is defined as closed.

In the event an obstacle is verified during the "opening phase", and therefore one of the two tasks 31 or 32 gave a positive value, passing to the obstacle management phase 47 or 48, the "opening phase" would not have terminated with the routine 35, and therefore would not have updated the opening currents map.

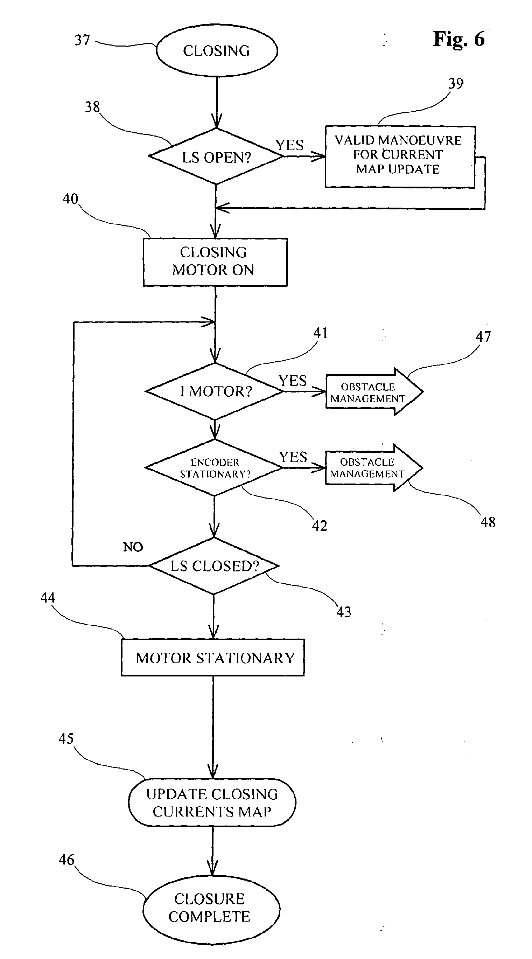

Fig. 6 illustrates the flow chart of the "closure phase" the concept of which corresponds to the flow chart of the "opening phase" illustrated in fig. 5.

Blocks 37 to 46 follow the same steps as blocks 27 to 36.

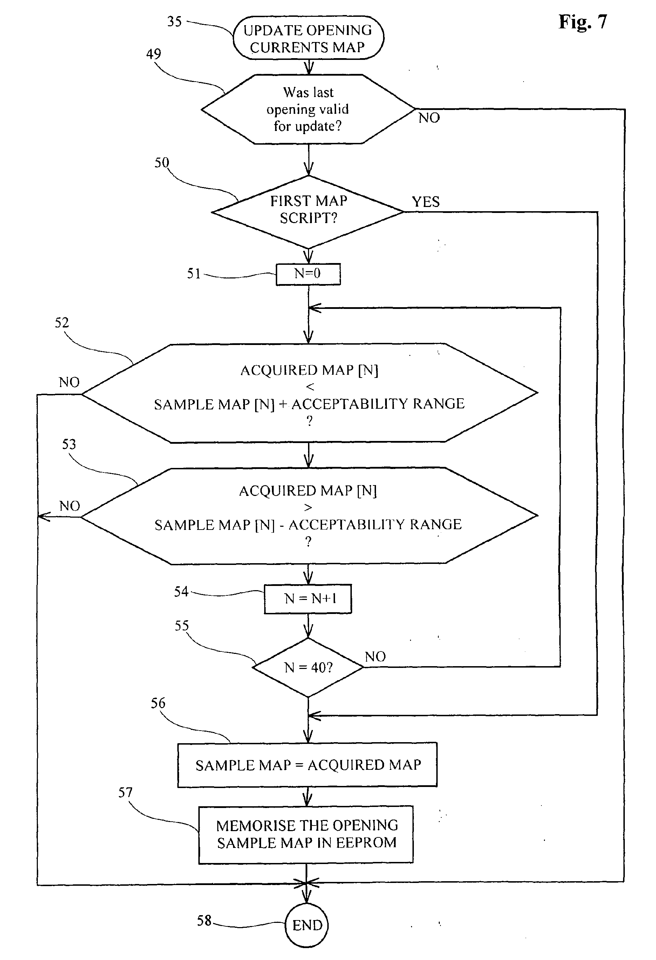

Fig. 7 illustrates the detailed flow chart performed by the opening currents map update routine 35 at the end of the "opening phase" (this can be performed both on each opening phase or after a few opening cycles).

Block 49 verifies if the last opening was valid for the updating of the maps and, if the verification is not satisfied, the routine is concluded.

If on the other hand the last opening was valid for the updating of the maps, it is firstly verified in block 50 if it is the first script in the Eeprom 17, and if positive passes directly to block 56 in which the acquired map becomes the opening sample map and is memorised in Eeprom 17 with block 57 and at the end the routine 35 with block 58.

In the event that the verification in block 49 shows that that the last opening was valid for the update of the map and the verification of block 50 shows that there is no previous map script, the counter N is used at a value of 0 in block 51 and the two controls are subsequently performed in blocks 52 and 53 and the N value is increased in block 54 until the verification is satisfied, followed by block 55, of N=40 (the value N=40 is obviously exemplificative and can be opportunely changed depending on the variability of the force).

If the controls performed during the loop from 0 to 40 of N have always been positive, and the said loop has not been exited, as before one proceeds with block 56 in which the acquired map becomes the sample map written with block 57 in the Eeprom 17.

Blocks 52 and 53 verify that for every section of the forty divisions of the opening movement of the mobile parts identified with each of the corresponding N values, the current value of that section, defined as "sample map [N]" is increased by a value defined as "acceptability range", inferior (block 52) or superior (block 57) to the corresponding current value of the map already acquired and present in the Eeprom 17.

If all of the forty current values are within the said acceptability range, this means that we are dealing with a map that has not deviated, for each value, both negative and positive, from the previous by more than one acceptability value. In this case the entire map is acceptable and becomes the sample map.

Supposing instead that at least one current value of a N section exits the acceptability range (a gust of wind, that impeding the opening movement has caused the door to absorb more current), then the entire acquired current map is discarded and the previously memorised sample map is maintained in the Eeprom 17.

Because the opening and closing maps can be different, two different maps must be maintained and distinguished by the two movement directions of the doors mobile parts.

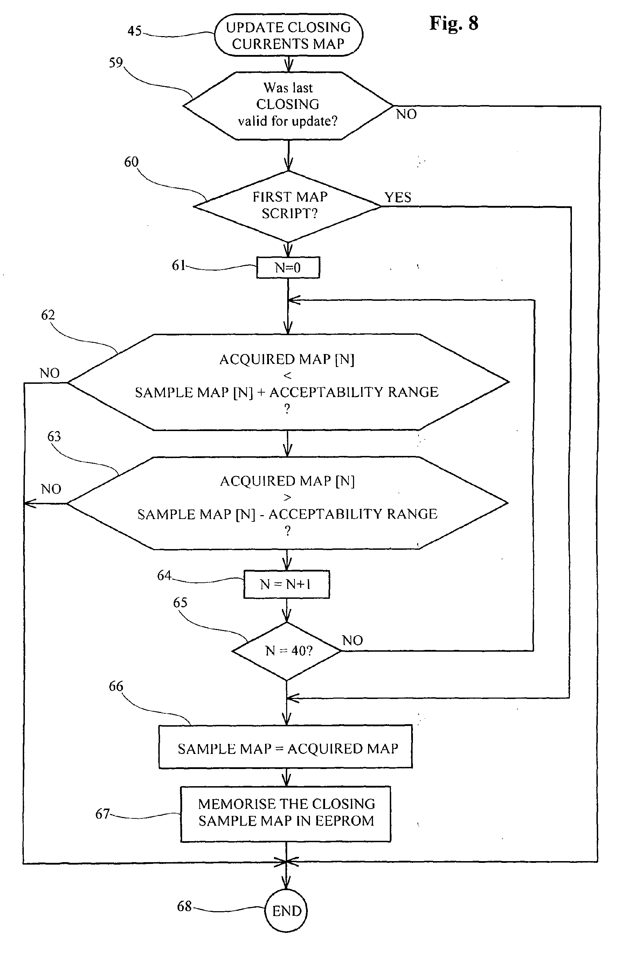

It is for this reason that closing map updating routine 45 exists as shown in fig. 8 that, retracing the same steps of the flow chart from 35, 49 to 58, the same steps are presented from 45, 59 to 68 writing with block 67 in the Eeprom 17 a closure sample map different from the opening sample map written from block 57.

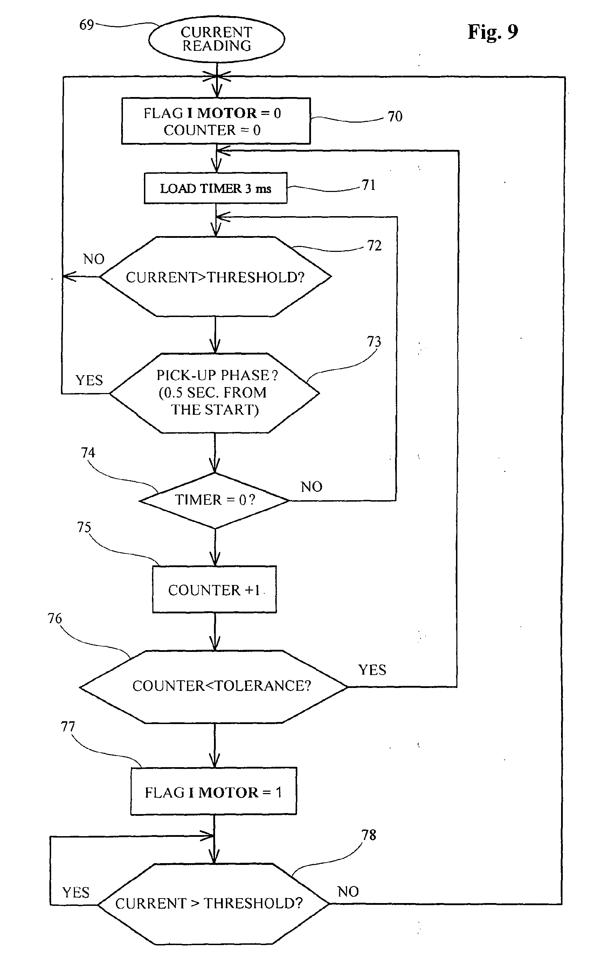

With reference to fig. 9 in detail is illustrated the flow chart related to the current reading task 69, parallel to the execution of the movements, that determines when the current threshold has been exceeded due to collision against an obstacle during the opening or closing manoeuvre of the doors mobile parts.

However depending on the circumstances this task can be made uninfluential in proximity to the final statuses (positioning of the mobile parts in proximity to the limit switches) making available the necessary current to the motors in order to complete the initial and final manoeuvring phases.

This "current monitoring" task sets the "I Motor" flag in blocks 31 and 41 as seen in the opening and closing flow chart.

Once the current reading task 69 is active, the flag I motor is set in block 70 at 0 and a counter is started taking its value to 0.

Subsequently a Timer is loaded with a value of 3 ms in block 71 and verified in block 72 if the measured momentary current is over the threshold value.

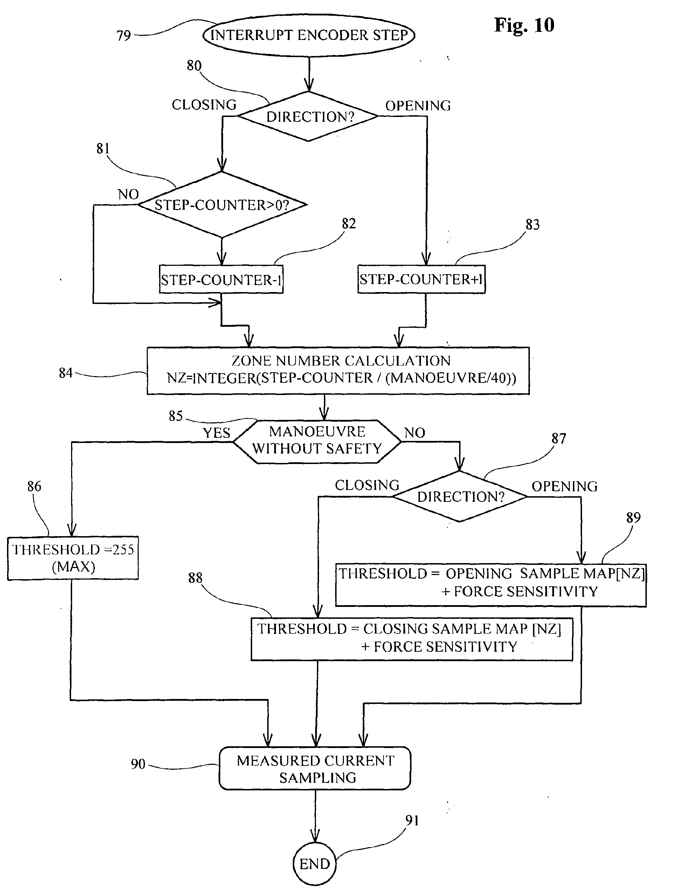

The threshold value is defined by the encoder step routine 79, the flow chart of which is illustrated in fig. 10.

This threshold value is equal, for each N section in which the manoeuvre of the mobile parts are divided, to the value of the sample map increased by a value equal to the force sensitivity.

If this verification has a negative outcome, or rather the momentary current measured is lower than the threshold, and therefore there is nothing abnormal, the routine does not proceed and returns to block 70.

If on the other hand the verification has a positive outcome, or rather the momentary current measured is higher than the threshold, it is verified in block 73 if this greater value is due to an absorption for the pick-up phase of the motors, which can occur 0.5 seconds from the start.

Also in this case, if the outcome of the verification shows that the current is greater than the threshold but this has occurred within the 0.5 seconds from the start, it must be supposed that the said excess is due to the absorption during the pick-up phase of the motors and therefore the routine does not proceed and returns to block 70.

In the event in which there is a collision caused by an obstacle with a current absorption greater than the threshold and it is not within the initial start phase, block 74 is taken into consideration that controls if the previously loaded timer has arrived to 0.

At least 3 ms must pass with the current over the threshold because it must ascertain the actual presence of an obstacle and not improper impulses or due to other possible disturbances.

In this way the obstacle reading system is rendered insensitive to false readings due to brief current impulses "spikes".

If in fact less than 3 ms have passed from when the timer was loaded, block 74 returns to control again whether the current remains over the threshold value.

Until the timer arrives on 0 and only then is block 75 continued that increases the counter to pass to block 76 that verifies if the counter has become greater than the tolerance value.

This tolerance parameter has been introduced because a timer of 3 ms is still too fast to define a sure collision caused by an obstacle.

Therefore the timer is loaded many times from block 71 and verified in block 72 until the counter is greater than the tolerance value.

In this case we are looking at a current that has exceeded the threshold for a sufficient time to be surely considered as a collision caused by an obstacle. Therefore the Flag I motor is set at 1 in block 77 and block 31 gives a positive value and proceeds to obstacle management routine 47.

Subsequently, it being ascertained that a collision caused by an obstacle has actually occurred, the mobile part must immediately move away with the immediate inversion of the manoeuvre.

Also in this case of moving away from the obstacle, the current absorbed by the motor must be monitored, that is foreseen in block 78.

Only if the current is lower than the threshold value does it mean that it was able to freely move away from the obstacle and hence returns to block 70 resetting the Flag I motor to zero.

If on the other hand the current continues to be greater than the threshold this means that, even reversing the direction of the mobile part, the movement encounters strong opposition, in which case the system continues to monitor the said situation until verifying that the current has become lower than the threshold.

In the flow chart illustrated in fig. 10 of the routine that defines in which NZ zone of the 40 zones in which it has been chosen as an example to divide the entire manoeuvre, the mobile part moves, the threshold used in the verification of block 72 is defined.

This routine defined as encoder 79 step interrupt is performed on each step received from the encoder.

This initially verifies in block 80 the manoeuvre direction of the mobile part carrying on to blocks 81 and 82 for closing manoeuvres, while following block 83 for the opening manoeuvres.

After having received an encoder step in this last manoeuvre, the step-counter (which starts from zero at the beginning of an opening manoeuvre) is increase in block 83.

Whereas for closing manoeuvres it is firstly verified, in block 81, that the step-counters do not become negative and therefore decreases after each encoder step in block 82.

Then in which NZ zone number the mobile parts are found to move in that moment, are defined in block 84, after having received all the encoder steps. In this example the entire manoeuvre has been divided into 40 zones.

Once the zone number in which the mobile part is found to operate has been determined, the manoeuvre that is being performed is controlled in block 85 to see if it is a manoeuvre without safety, proceeding in block 86 to set the threshold equal to the maximum possible value (a value of 255 for example) or if the manoeuvre that is being performed is a manoeuvre in safety, proceed to block 87 that verifies the direction, if opening, and then proceed to block 88, or closing, and then to block 89.

Block 88 sets the threshold value to a value equal to the closure sample map value for that section increased by a value defined as "force sensitivity".

The "force sensitivity" value is suitably taken depending on the opening or closing phases; and can be used as a variable value during each of these manoeuvring phases to take into account many parameters (in proximity to the final statuses, detected risk to the manoeuvre in a particular position of the mobile part, etc).

In the same manner as block 88 block 89 proceeds to determine the threshold value but increasing by the "force sensitivity" value, the value of the opening sample map for that section.

In fact the two maps are different and distinct, in as much that there could be different forces on the motors during the opening and closing phases.

This routine, the threshold values having been defined, both for the safety manoeuvre and for the manoeuvre without safety, proceeds with block 90 to perform the sampling of the measured current, used in block 72 and eventually in block 78.

It subsequently terminates in block 91 awaiting another encoder step, for which it restarts from block 79.

For each individual zone, clearly for the acquired opening map and the acquired closing map, only the maximum measured value is maintained and memorised in the corresponding zone of the acquired map.

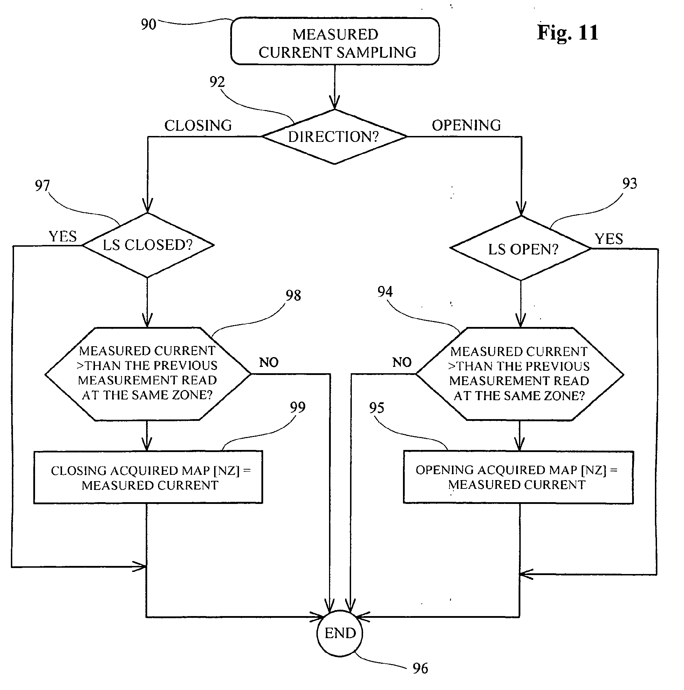

All of the 40 maximum values each relative to a zone make up the acquired map, that will define the opening and closing if the values have been taken from an opening or closing manoeuvre. The flow chart of the routine that chooses the 40 maximum values during the manoeuvre is illustrated in fig. 11.

After the sampling of the current measured by block 90, block 92 verifies if the manoeuvre is opening or closing.

Assuming an opening manoeuvre it is verified in block 93 that the limit switch is not open, or rather at the end of the manoeuvre, in which case the routine terminates in block 96; if the verification of the open limit switch is not satisfied during the manoeuvre, it is verified in block 94 if the measure current value is greater than the previous measurement related to the same zone. Only if this verification is positive is the acquired opening map, related to that zone, updated in block 95 with the new measured current value, that has been seen to be greater than the previous measurement of the same zone. This routine terminates awaiting a new sampling value of the measured current.

Blocks 97, 98 and 99 perform in closing the same steps performed by blocks 93, 94 and 95 in opening.

Block 99 acts on the acquired closing map.

It is to be seen that the "stationary encoder" routine 32 is not examined in detail, because it triggers, in the presence of an obstacle, after the "obstacle management" tripping due to the threshold having been exceeded by the measured current.

The "stationary encoder" routine begins to function only when found in the final part of the opening or closing manoeuvre, the movement of which is performed at reduced speed, for the final approach to the fully closed or fully open position, requiring the maximum current, and therefore placing the threshold value to the maximum for the control of the current.

In this case the detection of an obstacle occurs when a determined period between two encoder steps is exceeded, or rather with a manoeuvre speed of the mobile part that is excessively diminished beyond the set functioning speed.

Furthermore, the said "stationary encoder" routine may not trigger with the same sensitivity along the entire manoeuvre of the mobile part. In fact it can be made more or less sensitive based on the position of the mobile part, on the opening or closing phase, on the proximity to the fully closed or fully open positions.

## Claims

1. The control automatism for the movement of a door that triggers through the detection of a collision by the mobile part of the said door against an obstacle during the manoeuvre, when the current absorbed by one or more manoeuvring motors exceeds a threshold value which is a value that has been determined from the same current absorbed by the said one or more motors during a previous regularly performed manoeuvre, the said current value being increased by one value defined as "force sensitivity".

2. Control automatism for the movement of a door following claim 1 **characterised by** the fact that the said threshold value is comprised of a finished number of values, corresponding to the different currents absorbed during the manoeuvres by the mobile part of a door by the manoeuvring motors.

3. Control automatism for the movement of a door following the previous claim **characterised by** the fact that the said value is composed of a limited number of values, corresponding to the maximum value of each of those in which is divided the entire movement of the mobile parts of a door by the manoeuvring motors, creating a sample map of currents.

4. Control automatism for the movement of a door following one of the previous claims **characterised by** the fact that the confrontation threshold values are the values of the current absorbed by the previous movement by comparison.

5. Control automatism for the movement of a door following one or more of the previous claims **characterised by** the fact of possessing a control of a collision that has occurred against an obstacle comprised of a speed control that triggers at the moment in which the control of the surpassing of the said threshold by the absorbed current cannot trigger, or for the non-surpassing of the said threshold or because disabled.

6. Control automatism for the movement of a door following one or more of the previous claims **characterised by** the fact that the said threshold, or sample map of currents, is different and distinct for the two directions, in opening and closing, of the mobile parts of the door.

7. Control automatism for the movement of a door following one or more of the previous claims **characterised by** the fact that the first manoeuvre by the mobile parts occurs with the memorisation of the first threshold or of the first sample map of currents.

8. Control automatism for the movement of a door following one or more of the previous claims **characterised by** the fact that the threshold or the map of currents must be within an acceptability range to be a threshold or a map of currents valid for the control of the absorption of currents for the subsequent movements.

9. Control automatism for the movement of a door following one or more of the previous claims **characterised by** the fact that the surpassing of the current absorbed by the motors must remain above the threshold for a set time, making the control system insensitive to an impulse of current that is not due to an obstacle.

10. Control automatism for the movement of a door following one or more of the previous claims **characterised by** the fact of possessing in series to the said one or more motors a suitable resistance that limits the voltage to the said one or more motors in the event of a substantial increase of absorbed current due to the collision by the mobile parts of a door.

11. Control automatism for the movement of a door following one or more of the previous claims **characterised by** the fact that the said resistance can be short-circuited by the system when as programmed the maximum power is requested of the motors, in particular at the end of the manoeuvre of the mobile parts, or rather at the beginning and/or end of the opening and/or closing phases.

12. Method for a control automatism for the movement of a door including the programs for the "opening phase" (or corresponding closing phase), "current monitoring", "threshold definition", the said programs, performed for a normal opening manoeuvre, defined by the following steps:
Opening phase program:
- Verification of the closed-limit switch status (to determine if the said movement is a valid manoeuvre to update the current map);
- Operation of the motors;
- Control of the Flag I motor (the Flag I motor status is determined by the current reading program) for the eventual exit from the opening phase program with the beginning of the obstacle management routine;
- Stationary encoder control (The Stationary encoder status is determined by the excessive time between two encoder steps) for the eventual exit from the opening phase program with the beginning of the obstacle management routine;
- Verification of the open-limit switch status to determine that the opening manoeuvre is complete;
- Motor stationary;
- Beginning of the opening currents map updating.
Current reading program:
- Setting of the flag I motor to 0;
- Verification that the current absorbed by the manoeuvre motors of the mobile parts of the door during the manoeuvre is inferior to the threshold; if the said current exceeds the threshold, for a definable time, the flag I motor is set to 1.
Threshold definition program.
- Receipt of encoder steps;
- Calculation of the encoder steps in which zone number of the manoeuvre the mobile part of the door is found;
- Definition of the threshold, for the zone of the manoeuvre in which the mobile part of the door is found, such as the previous current value absorbed by the motors in the same zone, increased by a parameter defined as "force sensitivity".

13. Method for a control automatism for the movement of a door following the previous claim including a "currents map updating" routine, for an opening manoeuvre, defined with following steps:
- verify if the last, or preset and previous opening was valid for the updating (or rather if the last, or a preset and previous opening has regularly occurred without obstacles);
- verify if the acquired map of the currents, composed of the maximum read current value in each individual section, is within an acceptability range for each of the values in relation to a previously memorised sample map;
- Replacement of the sample map with the acquired map;
- Memorisation of the new sample map.

14. Program including a suitable code to perform all steps of at least one of the claims 12 or 13 when the said program is performed by a microprocessor.

15. Program as defined in claim 14 memorised on any medium that can be read by computer or microprocessor.
